(19) Europäisches Patentamt / European Patent Office / Office européen des brevets

(11) **EP 2 782 235 A1**

(12) **EUROPEAN PATENT APPLICATION**

(43) Date of publication:
24.09.2014 Bulletin 2014/39

(51) Int Cl.:
*H02M 1/34* (2007.01)          *H02M 3/155* (2006.01)

(21) Application number: **13160435.7**

(22) Date of filing: **21.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Mitsubishi Electric R&D Centre Europe B.V.**
  **1119 NS  Schiphol Rijk (NL)**
  Designated Contracting States:
  **FR**
• **Mitsubishi Electric Corporation**
  **Chiyoda-ku**
  **Tokyo 100-8310 (JP)**
  Designated Contracting States:
  **AL AT BE BG CH CY CZ DE DK EE ES FI GB GR HR HU IE IS IT LI LT LU LV MC MK MT NL NO PL PT RO RS SE SI SK SM TR**

(72) Inventors:
• **Lefevre, Guillaume**
  **35708 Rennes Cedex 7 (FR)**
• **Foube, Laurent**
  **35708 Rennes Cedex 7 (FR)**

(74) Representative: **Maillet, Alain**
  **Cabinet Le Guen Maillet**
  **5, place Newquay**
  **B.P. 70250**
  **35802 Dinard Cedex (FR)**

(54) **Converter  composed of at least a first and a second switches and a snubber circuit which protects the second switch**

(57)    The present invention concerns a converter composed of at least a first and a second switches, a first inductor, a first capacitor and at least two diodes and a snubber circuit which protects the second switch, characterized in that the snubber circuit is composed of a second inductor, a second capacitor and a third and a fourth diodes and in that the discharge of the second inductor is performed through the second capacitor during a time period which is at most half the period of the resonant circuit composed of the second capacitor and the second inductor and in the first capacitor after the time period.

Fig. 1a

EP 2 782 235 A1

**Description**

The present invention relates generally to a converter composed of at least a first and a second switches, a first inductor, a first capacitor and at least two diodes and a snubber circuit which protects the second switch.

A photovoltaic cell directly converts solar energy into electrical energy. The electrical energy produced by the photovoltaic cell can be extracted over time and used in the form of electric power. The direct electric power generated by photovoltaic cell is provided to conversion devices like DC-DC converter circuits and to DC/AC inverter circuits.

However, the current-voltage droop characteristics of photovoltaic cells cause the output power to change nonlinearly with the current drawn from photovoltaic cells. The power-voltage curve changes according to climatic variations like light irradiance levels and operation temperatures.

The near optimal point at which to operate photovoltaic arrays is at or near the region of the current-voltage curve where power is greatest. This point is denominated as the Maximum Power Point (MPP).

It is important to operate the photovoltaic cells around the MPP to optimize their power generation efficiency.

As the power-voltage curve changes according to climatic variations, the MPP also changes according to climatic variations.

It is then necessary to be able to identify the MPP anytime.

For that, the duty cycle of switches of DC-DC converter circuit is modified in order to adapt the DC-DC converter to any input voltage and/or current.

As DC-DC converters comprise parasitic or stray inductors and switches, sudden interruption of current flow leading to a sharp rise in voltage across the switching device, in accordance with Faraday's law. This transient can be a source of electromagnetic interference. Additionally, if the voltage generated across the device is beyond what the device is intended to withstand, it may damage or destroy it. A snubber provides a short-term alternative current path around the current switching device so that the inductive elements may be discharged more safely and quietly.

To that end, the present invention concerns a DC-DC converter composed of at least a first and a second switches, a first inductor, a first capacitor and at least two diodes and a snubber circuit which protects the second switch, **characterized in that** the snubber circuit is composed of a second inductor, at least a second capacitor and a third and a fourth diodes and in that the discharge of the second inductor is performed through the second capacitor during a time period which is at most half the period of the resonant circuit composed of the second capacitor and the second inductor and in the first capacitor after the time period.

Thus, the sudden interruption of current flow leads to a sharp rise in voltage across the second switch is avoided.

According to a particular feature, the DC-DC converter is a three level boost converter.

According to a first mode of realization, a first terminal of the second inductor is connected to a terminal of the first switch and to a terminal of the first capacitor, a second terminal of the second inductor is connected to the anode of the third diode and to a first terminal of the second switch, the cathode of the third diode is connected to the anode of the fourth diode and to a terminal of the second capacitor, the second terminal of the second capacitor is connected to an input terminal of the DC-DC converter and to the second terminal of the second switch, the cathode of the fourth diode is connected to the second terminal of the first capacitor.

Thus, the sudden interruption of current flow leads to a sharp rise in voltage across the second switch is avoided.

According to a second mode of realization, a terminal of the first switch is connected to a terminal of the first capacitor, to the anode of the third diode and to a first terminal of the second switch, the cathode of the third diode is connected to the anode of the fourth diode and to a terminal of the second capacitor, the second terminal of the second capacitor is connected to an input terminal of the DC-DC converter and to the second terminal of the second switch, a second terminal of the first capacitor is connected to a first terminal of the second inductor and the second terminal of the inductor is connected to the cathode of the fourth diode.

Thus, the sudden interruption of current flow leads to a sharp rise in voltage across the second switch is avoided.

According to a particular feature, the DC-DC converter is a boost converter.

According to a particular feature, a first terminal of the second switch is connected to a terminal of the first capacitor and to the anode of the third diode, the cathode of the third diode is connected to the anode of the fourth diode and to a first terminal of the second capacitor, the second terminal of the second capacitor is connected to an input terminal of the DC-DC converter and to the second terminal of the second switch, the first terminal of the second inductor is connected to a first terminal of the second capacitor and the cathode of the fourth diode is connected to the second terminal of the second inductor.

Thus, the sudden interruption of current flow leads to a sharp rise in voltage across the second switch is avoided.

According to a particular feature, the snubber circuit further comprises another capacitor of which a first terminal is connected to the anode of the fourth diode and a second is connected to the anode of the second diode.

According to a particular feature, the DC-DC converter is a buck converter.

According to a particular feature, a first terminal of the first switch is connected to a first input of the DC-DC converter, the anode of the third diode is connected to the cathode of the fourth diode, to a first terminal of the third capacitor, the cathode of the third diode is connected to a first terminal of the second inductor and to a second terminal of the first switch, the anode of the third diode is connected to the anode of the fourth diode and to the cathode of the second diode and to a first terminal of the second capacitor, the second terminal of the second capacitor is connected to a second terminal of the second inductor and to a first terminal of the second switch, the second terminal of the second switch is connected to the cathode of the second diode and to a first terminal of the first inductor, the second terminal of the first inductor is connected to a first output terminal of the DC-DC converter, the second terminal of the fourth capacitor is connected to a second input and output terminals of the DC-DC converter and to the anode of the second diode.

Thus, the sudden interruption of current flow leads to a sharp rise in voltage across the second switch is avoided.

According to a particular feature, the snubber circuit further comprises another capacitor of which a first terminal is connected to the anode of the third diode and a second terminal is connected to the first terminal of the first switch.

According to a particular feature, the converter is a bidirectional converter which further comprises a third and a fourth switches, a third and a fourth diodes, the snubber circuit further protects the fourth switch and the snubber circuit further comprises a third capacitor.

The characteristics of the invention will emerge more clearly from a reading of the following description of an example embodiment, the said description being produced with reference to the accompanying drawings, among which :

Fig. 1a is a first example of a three level boost converter in which the present invention is implemented;

Fig. 1b is a second example of a three level boost converter in which the present invention is implemented;

Fig. 1c is a third example of a boost converter in which the present invention is implemented;

Fig. 1d is a fourth example of a buck converter in which the present invention is implemented;

Fig. 1e is an example of a bidirectional converter in which the present invention is implemented;

Fig. 2 represents an example of a device comprising a three level converter or a three level bidirectional converter in which the present invention is implemented;

Fig. 3a represents the equivalent electric circuit, during a first phase when a switch of the three level boost converter moves from a conductive state to a non conductive state;

Fig. 3b represents the equivalent electric circuit, during a second phase when a switch of the three level boost converter moves from a conductive state to a non conductive state;

Fig. 3c represents the equivalent electric circuit, during a third phase when a switch of the three level boost converter moves from a conductive state to a non conductive state;

Figs. 4a and 4b represent current and voltage variations during the first, second and third phases when a switch of the three level boost converter moves from a conductive state to a non conductive state;

Fig. 5a represents the equivalent electric circuit, during a fourth phase when a switch of the three level boost converter moves from a non conductive state to a conductive state;

Fig. 5b represents the equivalent electric circuit, during a fifth phase when a switch of the three level boost converter moves from a non conductive state to a conductive state;

Fig. 5c represents the equivalent electric circuit, during a sixth phase when a switch of the three level boost converter moves from a non conductive state to a conductive state;

Figs. 6 represent current and voltage variations during the fourth, fifth and sixth phases when a switch of the three level boost converter moves from a non conductive state to a conductive state.

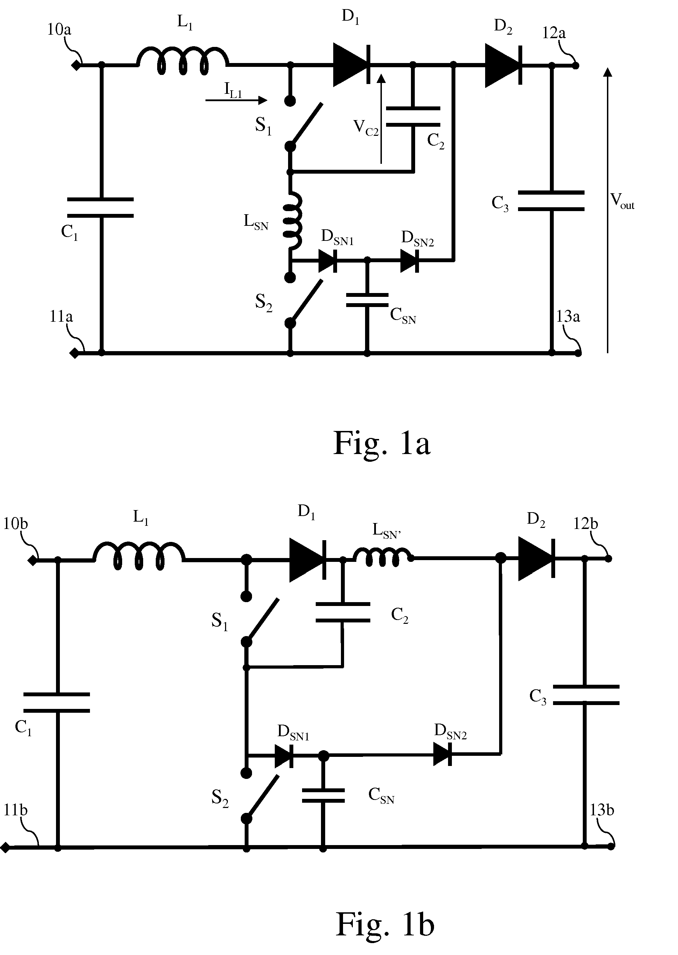

**Fig. 1a** is a first example of a three level boost converter in which the present invention is implemented.

The three level boost converter is composed of an inductor $L_1$, two diodes $D_1$, and $D_2$, three capacitors $C_1$, $C_2$ and $C_3$, a first switch $S_1$, and a second switch $S_2$ and of a snubber circuit according to the present invention.

The snubber circuit is composed of an inductor $L_{SN}$, two diodes $D_{SN1}$ and $D_{SN2}$ and a capacitor $C_{SN}$ and enables the demagnetisation of the inductor $L_{SN}$ during change of conductive/non conductive state of the switch $S_2$ and enables the slow charge/discharge of the capacitor $C_{SN}$.

The three level boost converter has two input terminals 10a and 11a. For example the three level boost converter is connected to a photovoltaic module. The present invention is also applicable in any DC power source.

For example, the input terminal 10a is connected to the positive terminal of the power source and the input terminal 11a is connected to the negative terminal of the power source.

The capacitor $C_1$ is connected in parallel with the input terminals 10a and 11a.

A first terminal of the inductor $L_1$ is connected to the input terminal 10a and a second terminal of the inductor $L_1$ is connected to a first terminal of the switch $S_1$ and to the anode of the diode $D_1$.

The second terminal of the switch $S_1$ is connected to a first terminal of the inductor $L_{SN}$ of the snubber circuit and to a first terminal of the capacitor $C_2$.

The inductor $L_{SN}$ is connected to a first terminal of the switch $S_2$ and to the anode of the diode $D_{SN1}$. The second terminal of the switch $S_2$ is connected to the input terminal 11a.

The second terminal of the capacitor $C_2$ is connected to the cathode of the diode $D_1$ and to the anode of the diode $D_2$ .

The cathode of the diode $D_2$ is connected to a first output terminal 12a of the three level boost converter.

The cathode of the diode $D_{SN1}$ is connected to the anode of the diode $D_{SN2}$ and to a first terminal of the capacitor $C_{SN}$.

The cathode of the diode $D_{SN2}$ is connected to the anode of the diode $D_2$.

The second terminal of the capacitor $C_{SN}$ is connected to the input terminal 11a and to a second output terminal 13a of the three level boost converter.

The capacitor $C_3$ is connected in parallel with the output terminals 12a and 13a.

**Fig. 1b** is a second example of a three level boost converter in which the present invention is implemented.

The three level boost converter is composed of an inductor $L_1$, two diodes $D_1$ and $D_2$, three capacitors $C_1$, $C_2$ and $C_3$, a first switch $S_1$ and a second switch $S_2$ and of a snubber circuit according to the present invention.

The snubber circuit is composed of an inductor $L_{SN}$, two diodes $D_{SN1}$ and $D_{SN2}$ and a capacitor $C_{SN}$ and enables the demagnetisation of the inductor $L_{SN}$ during change of conductive/non conductive state of the switch $S_2$.

The three level boost converter has two input terminals 10b and 11b. For example the three level boost converter is connected a photovoltaic module. The present invention is also applicable in any DC power source.

For example, the input terminal 10b is connected to the positive terminal of the power source and the input terminal 11b is connected to the negative terminal of the power source.

The capacitor $C_1$ is connected in parallel with the input terminals 10b and 11b.

A first terminal of the inductor $L_1$ is connected to the input terminal 10b and a second terminal of the inductor $L_1$ is connected a first terminal of the switch $S_1$ and to the anode of the diode $D_1$.

The second terminal of the switch $S_1$ is connected to a first terminal of the switch $S_2$, to a first terminal of the capacitor $C_2$ and to the anode of the diode $D_{SN1}$. The second terminal of the switch $S_2$ is connected to the input terminal 11b.

The second terminal of the capacitor $C_2$ is connected to the cathode of the diode $D_1$ and to a first terminal of the inductor $L_{SN}$.

The second terminal of the inductor $L_{SN}$ is connected to the anode of the diode $D_2$ and to the cathode of the diode $D_{SN2}$.

The cathode of the diode $D_2$ is connected to a first output terminal 12b of the three level boost converter.

The cathode of the diode $D_{SN1}$ is connected to the anode of the diode $D_{SN2}$ and to a first terminal of the capacitor $C_{SN}$.

The cathode of the diode $D_{SN2}$ is connected to the anode of the diode $D_2$.

The second terminal of the capacitor $C_{SN}$ is connected to the input terminal 11b and to a second output terminal 13b of the three level boost converter.

The capacitor $C_3$ is connected in parallel with the output terminals 12b and 13b.

It has to noted here that in a variant of realization, the snubber of Fig. 1b may have second inductor $L_{SN'}$ located at the same location as the inductor $L_{SN}$ of the three level boost converter disclosed in Fig. 1a. In such variant of realization, the second inductor $L_{SN'}$ and the inductor $L_{SN}$ are magnetically coupled.

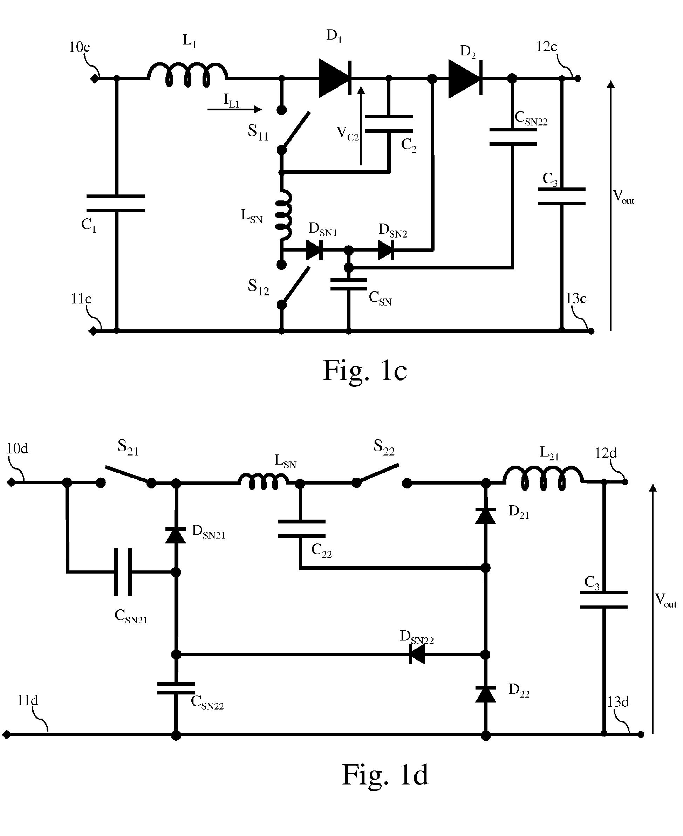

**Fig. 1c** is a third example of a boost converter in which the present invention is implemented.

The boost converter is composed of an inductor $L_1$, two diodes $D_1$ and $D_2$, three capacitors $C_1$, $C_2$ and $C_3$, a first switch $S_{11}$ and a second switch $S_{12}$ and of a snubber circuit according to the present invention.

The snubber circuit is composed of an inductor $L_{SN}$, two diodes $D_{SN1}$ and $D_{SN2}$ and two capacitors $C_{SN11}$ and $C_{SN12}$ and enables the demagnetisation of the inductor $L_{SN}$ during change of conductive/non conductive state of the switch $S_2$.

The boost converter has two input terminals 10c and 11c. For example the boost converter is connected to a photovoltaic module. The present invention is also applicable in any DC power source.

For example, the input terminal 10c is connected to the positive terminal of the power source and the input terminal 11c is connected to the negative terminal of the power source.

The capacitor $C_1$ is connected in parallel with the input terminals 10c and 11c.

A first terminal of the inductor $L_1$ is connected to the input terminal 10c and a second terminal of the inductor $L_1$ is connected to a first terminal of the switch $S_{11}$ and to the anode of the diode $D_1$.

The second terminal of the switch $S_{11}$ is connected to a first terminal of the inductor $L_{SN}$ of the snubber circuit and to a first terminal of the capacitor $C_2$.

The inductor $L_{SN}$ is connected to a first terminal of the switch $S_{22}$ and to the anode of the diode $D_{SN1}$. The second terminal of the switch $S_{22}$ is connected to the input terminal 11c.

The second terminal of the capacitor $C_2$ is connected to the cathode of the diode $D_1$ and to the anode of the diode $D_2$.

The cathode of the diode $D_2$ is connected to a first output terminal 12c of the boost converter.

The cathode of the diode $D_{SN1}$ is connected to the anode of the diode $D_{SN2}$ and to a first terminal of the capacitor $C_{SN11}$.

The cathode of the diode $D_{SN12}$ is connected to the anode of the diode $D_2$.

The second terminal of the capacitor $C_{SN11}$ is connected to the input terminal 11c and to a second output terminal 13c of the boost converter.

A first terminal of the capacitor $C_{SN12}$ is connected to the first terminal of the capacitor $C_{SN11}$ and to the cathode of the diode D2.

It has to be noted here that the behaviour of the capacitors $C_{SN11}$ and $C_{SN12}$ are complementary. When the capacitor $C_{SN11}$ charges, the capacitor $C_{SN12}$ discharges and when the capacitor $C_{SN11}$ discharges, the capacitor $C_{SN12}$ charges.

It has to be noted here that in a variant of realization, the snubber of Fig. 1c may have second inductor $L_{SN'}$ located at the same location as the inductor $L_{SN}$ of the three level boost converter disclosed in Fig. 1a. In such variant of realization, the second inductor $L_{SN'}$ and the inductor $L_{SN}$ are magnetically coupled.

The capacitor $C_3$ is connected in parallel with the output terminals 12c and 13c.

**Fig. 1d** is a fourth example of a buck converter in which the present invention is implemented.

The buck converter is composed of an inductor $L_{21}$, four diodes $D_{21}$, $D_{22}$, $D_{23}$ and $D_{24}$, one capacitor $C_{22}$, a first switch $S_{21}$ and a second switch $S_{22}$ and of a snubber circuit according to the present invention.

The snubber circuit is composed of an inductor $L_{SN21}$, two diodes $D_{SN21}$, and $D_{SN22}$ and two capacitors $C_{SN21}$, and $C_{SN22}$ and enables the demagnetisation of the inductor $L_{SN}$ during change of conductive/non conductive state of the switch $S_{22}$.

The buck converter has two input terminals 10d and 11d. For example the buck converter is connected to a photovoltaic module. The present invention is also applicable in any DC power source.

For example, the input terminal 10d is connected to the positive terminal of the power source and the input terminal 11d is connected to the negative terminal of the power source.

A first terminal of the capacitor $C_{SN21}$ is connected to the input terminal 10d and to a first terminal of the switch $S_{21}$.

The second terminal of the capacitor $C_{SN21}$ is connected to the anode of the diode $D_{SN21}$, to a first terminal of the capacitor $C_{SN22}$ and to the cathode of the diode $D_{SN22}$.

The cathode of the diode $D_{SN21}$ is connected to a first terminal of the inductor $L_{SN}$ and to the second terminal of the switch $S_{21}$.

The second terminal of the capacitor $C_{SN22}$ is connected to the input terminal 11d and to the output terminal 13d.

The anode of diode $D_{SN22}$ is connected to the cathode of diode $D_{22}$ to a first terminal of the capacitor $C_{22}$ and to the anode of the diode $D_{21}$.

The second terminal of the capacitor $C_{22}$ is connected to the second terminal of the inductor $L_{SN}$ and to a first terminal of the switch $S_{22}$.

The second terminal of the switch $S_{22}$ is connected to the cathode of the diode $D_{21}$ and to a first terminal of the inductor $L_{21}$.

The second terminal of the inductor $L_{21}$ is connected to the output terminal 12d and to a first terminal of the capacitor $C_3$.

The second terminal of the capacitor $C_3$ is connected to the output terminal 13d.

It has to be noted here that the behaviours of the capacitors $C_{SN11}$ and $C_{SN12}$ are complementary. When the capacitor $C_{SN11}$ charges, the capacitor $C_{SN12}$ discharges and when the capacitor $C_{SN11}$ discharges, the capacitor $C_{SN12}$ charges.

It has to be noted here that in a variant of realization, the snubber of Fig. 1d may have second inductor $L_{SN'}$ located between the cathode of the diode D22 and the anode of diode $D_{21}$ In such variant of realization, the second inductor $L_{SN'}$ and the inductor $L_{SN}$ are magnetically coupled.

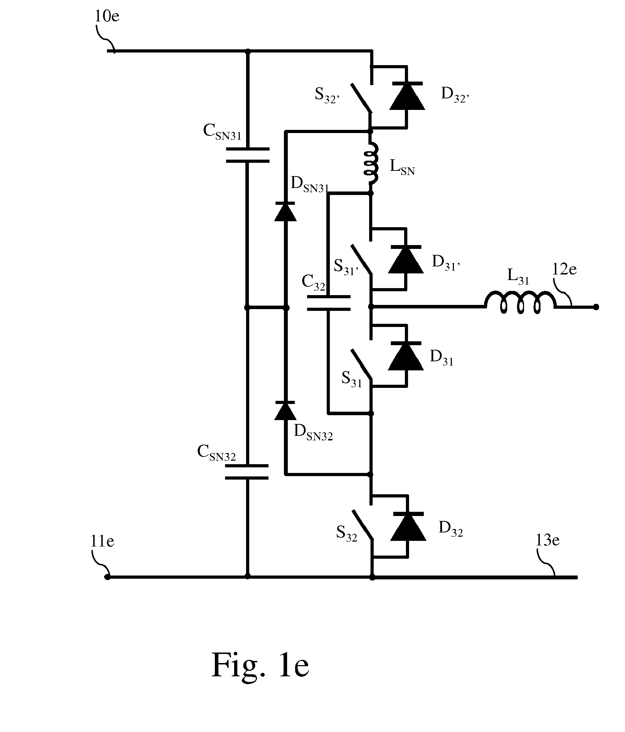

**Fig. 1e** is an example of a bidirectional converter in which the present invention is implemented.

The bidirectional converter is composed of an inductor $L_{31}$, four diodes $D_{31}$, $D_{31'}$, $D_{32}$ and $D_{32'}$, one capacitor $C_{32}$, a first switch $S_{31}$, a second switch $S_{32}$, a third switch $S_{31'}$ and a fourth switch $S_{32'}$ and of a snubber circuit according to the present invention.

The snubber circuit is composed of an inductor $L_{SN31}$, two diodes $D_{SN31}$ and $D_{SN32}$ and two capacitors $C_{SN31}$ and $C_{SN32}$ and enables the demagnetisation of the inductor $L_{SN}$ during change of conductive/non conductive state of the switch $S_{32}$ and $S_{32'}$.

The bidirectional converter has two terminals 10e and 11e. For example the bidirectional converter is connected to a battery.

The bidirectional converter has two terminals 12e and 13e. For example the bidirectional converter is connected to an AC/AC converter.

A first terminal of the capacitor $C_{SN31}$ is connected to the terminal 10e, to the cathode of the diode $D_{32'}$ and to a first terminal of the switch $S_{21}$.

A second terminal of the capacitor $C_{SN31}$ is connected to a first terminal of the capacitor $C_{sN32}$, to the anode of the diode $D_{SN31}$ and to the cathode of diode $D_{SN32}$.

The second terminal of the switch $S_{32'}$ is connected to a first terminal of the inductor $L_{SN}$, to the anode of the diode $D_{32'}$ and to the cathode of diode $D_{SN31}$.

The second terminal of the inductor $L_{SN}$ is connected to the cathode of the diode $D_{31'}$, to a first terminal of the switch $S_{31'}$, and to a first terminal of the capacitor $C_{32}$.

The second terminal of the switch $S_{31'}$ is connected to the anode of the diode $D_{31'}$, to the cathode of the diode $D_{31}$, to a first terminal of the inductor $L_{31}$ and to a first terminal of the switch $S_{31}$.

The second terminal of the switch $S_{31}$ is connected to the anode of the diode $D_{31}$, to the cathode of the diode $D_{32}$, to the anode of the diode $D_{SN32}$ and to a first terminal of the switch $S_{32}$.

The second terminal of the switch $S_{32}$ is connected to the anode of the diode $D_{32}$, to the second terminal of the capacitor $C_{32}$ and to the terminals 11e and 13f.

The snubber circuit protects the switches $S_{32}$ and $S_{32'}$.

The second terminal of the inductor L31 is connected to the terminal 12e.

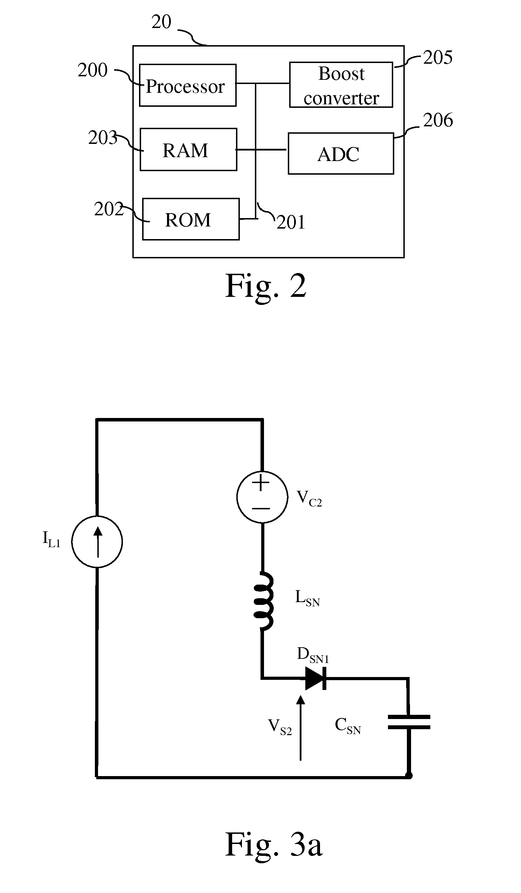

**Fig. 2** represents an example of a device comprising a three level boost converter in which the present invention is implemented.

The device 20 has, for example, an architecture based on components connected together by a bus 201 and a processor 200 controlled by a program. The program enables the control of the switches $S_1$ and $S_2$ in order to provide a controlled output voltage $V_{out}$ of the three level boost converter 205 or a controlled input voltage $V_{in}$.

It has to be noted here that the device 20 is, in a variant, implemented under the form of one or several dedicated integrated circuits which execute the same operations as the one executed by the processor 200 as disclosed hereinafter.

The bus 201 links the processor 200 to a read only memory ROM 202, a random access memory RAM 203, an analog to digital converter ADC 306 and the three level boost converter as the one disclosed in Fig. 1a or 1b or a boost converter as the one disclosed in Fig. 1c or a buck converter as the one disclosed in Fig. 1d or the bidirectional converter as the one disclosed in Fig. 1e.

The read only memory ROM 202 contains instructions of the program which are transferred, when the device 20 is powered on to the random access memory RAM 203.

The analog to digital converter 206 is connected to the three level boost converter 205 and converts voltages representative of the output voltage $V_{out}$ into binary information.

**Fig. 3a** represents the equivalent electric circuit, during a first phase when a switch of the three level boost converter moves from a conductive state to a non conductive state.

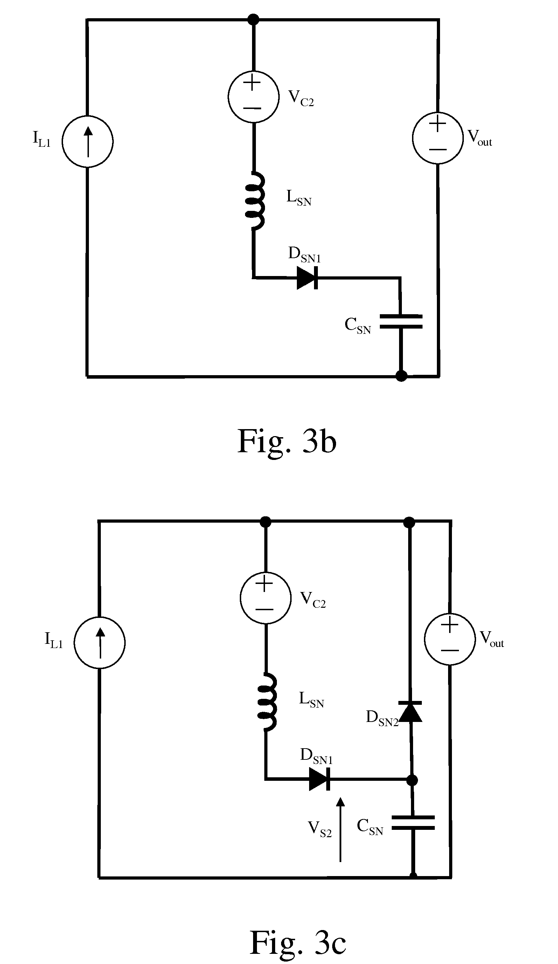

The equivalent circuits given in Fig. 3 are taken for the first example given in Fig. 1a. Similar equivalent circuits may be easily derived from the teaching of Figs. 3 for the examples given in Figs. 1b, 1c and 1d.

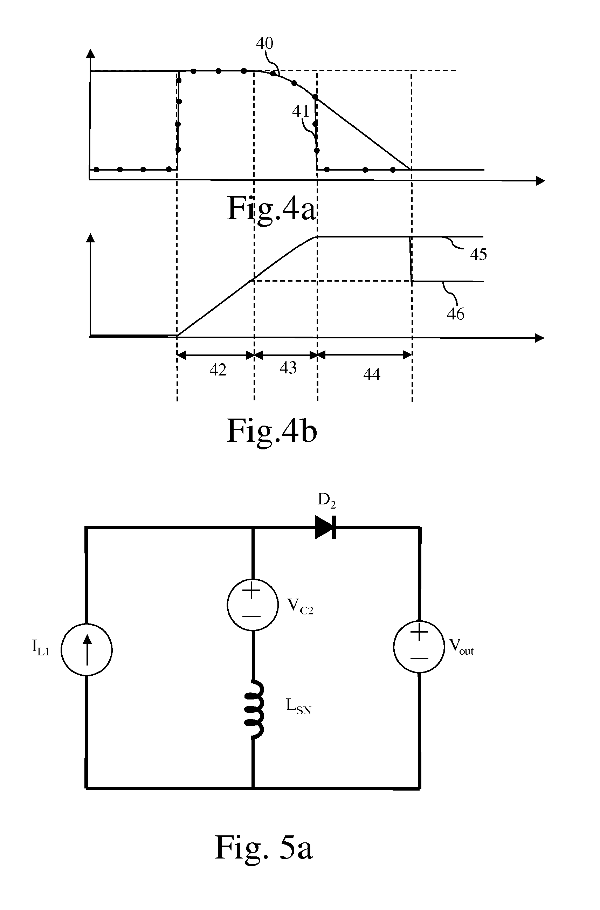

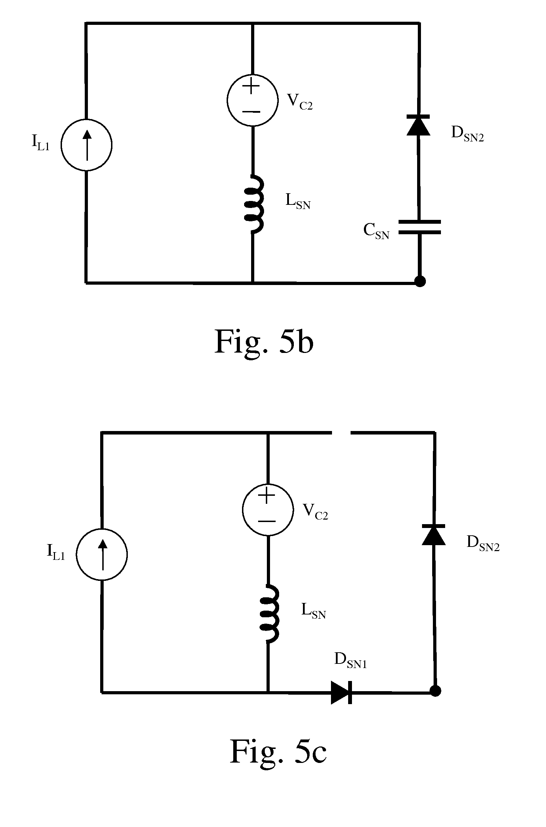

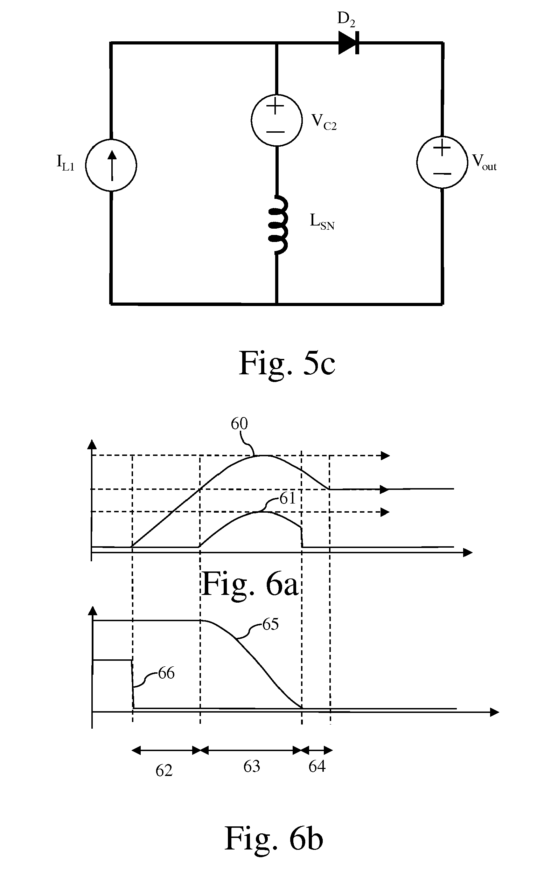

It has to be noted here that the equivalent circuits disclosed in Figs. 3 and 5 are given when the duty cycle of the switch $S_2$ is equal or upper than ½.

The current source $I_{L1}$ is the current provided by the inductor $L_1$, the voltage source $V_{C2}$ is the voltage of the capacitor $C_2$. The discharge of the inductor $L_1$ is made through the inductor $L_{SN}$, the diode $D_{SN1}$ and the capacitor $C_{SN}$. The voltage $V_{S2}$ is the voltage between the first and second terminals of the switch $S_2$.

When the switch $S_2$ changes from a conductive state to a non conductive state, and as the freewheeling diode $D_2$ remains reverse blocked, the current $I_{L1}$ of the inductor $L_1$ is constant and the capacitor $C_{SN}$ is charged.

The voltage between the terminals of the diode $D_{SN2}$ is equal to minus the voltage of the capacitor $C_2$ and the voltage on capacitor $C_{SN}$ is null.

The current $I_{L1}$ flows in capacitor $C_{SN}$.

The voltage $V_{D2}$ on the diode $D_2$ is equal to:

$$V_{D2} = -V_{C2} - V_{out} - V_{CSN},$$ where $V_{CSN}$ is the voltage on the capacitor $C_{SN}$.

It has to be noted here that $C_{SN}$ value should be replaced, in examples of Figs. 1c and Fig. 1d by the sum of $C_{SN11}$ and $C_{SN12}$ values, respectively the sum of $C_{SN11}$ and $C_{SN12}$ values.

It has also to be noted here that $L_1$, in the example of Fig. 1d is replaced by $L_{21}$.

The current $I_{L1}$ is equal to:

$$I_{L1} = C_{SN} * dV_{CSN}/dt,$$ then $V_{CSN}(t) = I_{L1}.t/C_{SN},$ where t is the time and d the derivative.

When $C_{SN}$ reaches $V_{D2} - V_{out}$, then $V_{D2} = 0$.

The first phase ends when $t = C_{SN} * (V_{C2} - Vout)/I_{L1}$.

**Fig. 3b** represents the equivalent electric circuit, during a second phase when a switch of the three level boost converter moves from a conductive state to a non conductive state.

6

The current source $I_{L1}$ is the current provided by the inductor $L_1$, the voltage source $V_{C2}$ is the voltage of the capacitor $C_2$ and the voltage source $V_{out}$ is the voltage at the output of the three level boost converter. The discharge of the inductor $L_1$ is made through the inductor $L_{SN}$, the diode $D_{SN1}$ and the capacitor $C_{SN}$. The voltage $V_{S2}$ is the voltage between the first and second terminals of the switch $S_2$.

Once the first phase ends, the diode $D_2$ is conductive but the diode $D_{SN2}$ is still reverse blocked. The inductor $L_{SN}$ and the capacitor $C_{SN}$ oscillate up to the diode $D_{SN2}$ becomes conductive. However, the second phase may stop if $L_{SN}$ is fully discharged before half the resonance period of $L_{SN}$ and $C_{SN}$.

$$\begin{cases} V_{CSN}(t) = (V_{out} - V_{C2}) + \sqrt{\dfrac{L_{SN}}{C_{SN}}} \cdot I_{L1} \cdot \sin(\omega_{SN} \cdot t) \\ I_{LSN}(t) = I_{L1} \cdot \cos(\omega_{SN} \cdot t) \end{cases}$$

Where $\omega_{SN}$ is the angular frequency of the inductor $L_{SN}$ and the capacitor $C_{SN}$, $I_{LSN}$ is the current of $I_{LSN}$.

$$\omega_{SN} = \frac{1}{\sqrt{L_{SN} \cdot C_{SN}}}.$$

The voltage across the switch $S_2$ is then $V_{S2} = V_{CSN}$.

Once $t = t_c = \dfrac{1}{\omega_{SN}} \cdot \arcsin\left( \dfrac{V_{C2}}{I_{L1}} \cdot \sqrt{\dfrac{C_{SN}}{L_{SN}}} \right)$, the third phase starts.

**Fig. 3c** represents the equivalent electric circuit, during a third phase when a switch of the three level boost converter moves from a conductive state to a non conductive state.

The current source $I_{L1}$ is the current provided by the inductor $L_1$, the voltage source $V_{C2}$ is the voltage of the capacitor $C_2$ and the voltage source $V_{out}$ is the voltage at the output of the three level boost converter. The diode $D_{SN2}$ becomes conductive.

The third phase starts if $\sqrt{\dfrac{L_{SN}}{C_{SN}}} * I_{L1} \geq V_{C2}$.

The inductor $L_{SN}$ is demagnetized as the voltage $-V_{C2}$ is applied.

$$I_{LSN}(t) = I(t_c) - \frac{V_{C2}}{L_{SN}} \cdot (t - t_C)$$

The voltage across the switch $S_2$ is then $V_{S2} = V_{out}$.

Then, when the third phase ends up, the diode $D_{SN1}$ is reverse biased and

$$V_{S2} = V_{out} - V_{C2}.$$

**Figs. 4a and 4b** represent current and voltage variations during the first, second and third phases when a switch of the three level boost converter moves from a conductive state to a non conductive state.

The Fig. 4a represents the evolution of the current $I_{LSN}$ noted 40 and the current $I_{CSN}$ noted 41 during the three phases disclosed in Figs. 3 a to 3c.

The Fig. 4b represents the evolution of the voltage $V_{CSN}$ noted 45 and the voltage $V_{S2}$ noted 46 during the three phases disclosed in Figs. 3a to 3c.

Prior the first phase, noted 42 in Figs. 4, the current $I_{CSN}$ is equal to null value. When the switch $S_2$ is turned

off, the current $I_{CSN}$ becomes equal to $I_{LSN}$. The capacitor $C_{SN}$ is charged and the voltage $V_{S2}$ on $S_2$ grows as the voltage $V_{CSN}$. The first phase ends when t=$C_{SN}$*($V_{C2}$-Vout)/$I_{L1}$.

During the second phase noted 43 in Figs. 4, the diode $D_2$ is conductive but the diode $D_{SN2}$ is still reverse blocked. The inductor $L_{SN}$ and the capacitor $C_{SN}$ oscillate up to the diode $D_{SN2}$ becomes conductive. The current $I_{CSN}$ and $I_{LSN}$ decrease.

The voltage $V_{S2}$ as the voltage $V_{CSN}$ reaches the voltage value of $V_{out}$.

Once $t = t_c = \dfrac{1}{\omega_{SN}} \cdot \arcsin\left( \dfrac{V_{C2}}{I_{L1}} \cdot \sqrt{\dfrac{C_{SN}}{L_{SN}}} \right)$, the third phase noted 44 in Figs. 4 starts. The current

$I_{LSN}$ starts to flow into the capacitor $C_2$, the voltage $V_{S2}$ becomes equal to $V_{out}$ -$V_{C2}$ and the voltage $V_{C2}$ becomes equal to $V_{out}$.

It has to be noted here that the capacitor $C_2$ value is at least equal to hundred time the capacitor $C_{SN}$ value. Despite the capacitor $C_2$ is charged, the voltage value of the capacitor $C_2$ is kept constant by modifying the duty cycle of switch $S_1$.

It has to be noted here that the switches $S_1$ and $S_2$ may not be of the same type. For example the switch S1 can operate up to $V_{C2}$ and those switch $S_2$ up to $V_{OUT}$. The switching times of the switch $S_1$ may be much lower than the one of the switch $S_2$.

For example, the switches $S_1$ and $S_2$ may be MOSFET or IGBT.

**Fig. 5a** represents the equivalent electric circuit, during a fourth phase when a switch of the three level boost converter moves from a non conductive state to a conductive state.

The current source $I_{L1}$ is the current provided by the inductor $L_1$, the voltage source $V_{C2}$ is the voltage of the capacitor $C_2$ and the voltage source $V_{OUT}$ is the voltage of the capacitor $C_3$.

The switch $S_2$ is switched in conductive state, which corresponds to inductive turn ON effect:

$$V_{S2} = V_{out} - V_{C2} - L_{SN} \cdot dI_{LSN}/dt \approx 0.$$

Then, $L_{SN} \cdot I_{LSN}/dt = V_{out}-V_{C2} \geq 0$, the inductor $L_{SN}$ is then magnetized.

When $I_{L1}$ flows in the switch $S_2$ instead of the diode $D_2$, $D_2$ is reverse blocked and voltage across can evolve depending on other elements.

The duration of the fourth phase equals : $\Delta ta = L_{SN} \cdot I_{L1} / (V_{out} - V_{C2})$.

**Fig. 5b** represents the equivalent electric circuit, during a fifth phase when a switch of the three level boost converter moves from a non conductive state to a conductive state.

The current source $I_{L1}$ is the current provided by the inductor $L_1$, the voltage source $V_{C2}$ is the voltage of the capacitor $C_2$.

Once the fourth phase ends, the diode $D_2$ is blocked, the voltage $V_{CSN}$ across the capacitor $C_{SN}$ is higher than the voltage $V_{C2}$ and tends to discharge through $V_{C2}$, $L_{SN}$ and $D_{SN2}$. The same resonance as disclosed in the second phase occurs and there is no dissipative energy transfer.

Considering initial conditions :

$V_{CSN}$ = Vout and $I_{LSN}$ = $I_{L1}$.

$$V_{CSN} = V_{C2} + (V_{out} - V_{C2}) * \cos(\omega_{SN}.t)$$

$$I_{CSN} = C_{SN} * \omega_{SN} * (V_{out} - V_C) * \sin(\omega_{SN}.t) / I_{LSN}(t) = I_{L1} + I_{CSN}(t)$$

The snubber capacitor $C_{SN}$ must discharge before $T_{SN}$ /2 where $T_{SN}$ is the period of the resonant circuit composed of $C_{SN}$ and $L_{SN}$ which means that $V_{out} \geq V_{C2}$ *2

Once $V_{CSN}$=0, the fifth phase ends and the sixth phase starts.

**Fig. 5c** represents the equivalent electric circuit, during a sixth phase, of the discharge of an inductor of the three level boost converter when a switch of the three level boost converter moves from a non conductive state to a conductive state.

The current source $I_{L1}$ is the current provided by the inductor $L_1$, the voltage source $V_{C2}$ is the voltage of the capacitor $C_2$ and the voltage source $V_{OUT}$ is the voltage of the capacitor $C_3$.

A positive current keeps flowing in the diode $D_{SN2}$, the diode $D_{SN1}$ becomes conductive when the voltage $V_{CSN}$ reaches null value.

The sixth phase starts before :

$$t = t_{c'} = \frac{1}{\pi * \omega_{SN}}$$

The inductor $L_{SN}$ is then demagnetised :

$$I_{LSN}(t) = I_{L1}(t_{c'}) - \frac{V_{C2}}{L_{CSN}} * (t - t_{c'})$$

**Figs. 6** represent current and voltage variations during the fourth, fifth and sixth phases when a switch of the three level boost converter moves from a non conductive state to a conductive state.

The Fig. 6a represents the evolution of the current $I_{LSN}$ noted 60 and the current $I_{CSN}$ noted 61 during the three phases disclosed in Figs. 5a to 5c.

The Fig. 6b represents the evolution of the voltage $V_{CSN}$ noted 65 and the voltage $V_{S2}$ noted 66 during the three phases disclosed in Figs. 5a to 5c.

Prior the fourth phase, noted 62 in Figs. 6, the switch $S_2$ moves from a non conductive step to a conductive state.

$$V_{S2} = V_{out} - V_{C2} - L_{SN} \cdot dI_{LSN}/dt \approx 0.$$

Then, $L_{SN} \cdot I_{LSN}/dt = V_{out} - V_{C2} \geq 0$, the inductor $L_{SN}$ is then magnetized.

When $I_{L1}$ flows in the switch $S_2$ instead of the diode $D_2$, $D_2$ is reverse blocked and voltage across can evolve depending on other elements.

The duration of the fourth phase equals : $\Delta ta = L_{SN} \cdot I_{L1} / (V_{out} - V_{C2})$.

Once the fourth phase noted 63 in Figs. 6 ends, the fifth phase starts. The diode $D_2$ is blocked, the voltage $V_{CSN}$ across the capacitor $C_{SN}$ is higher than the voltage $V_{C2}$ and tends to discharge through $V_{C2}$, $L_{SN}$ and $D_{SN2}$. The same resonance as disclosed in the second phase occurs and there is no dissipative energy transfer.

Considering initial conditions :

$$V_{CSN} = V_{out} \text{ and } I_{LSN} = I_{L1}.$$

$$V_{CSN} = V_{C2} + (V_{out} - V_C) * \cos(\omega_{SN}.t)$$

$$I_{CSN} = C_{SN} * \omega_{SN} * (V_{out} - V_C) * \sin(\omega_{SN}.t) / I_{LSN}(t) = I_{L1} + I_{CSN}(t)$$

The snubber capacitor $C_{SN}$ must discharge before $T_{SN}/2$ where $T_{SN}$ is the period of the resonant circuit composed of $C_{SN}$ and $L_{SN}$ which means that $V_{OUT} \geq V_{C2} * 2$

Once $V_{CSN}=0$, the fifth phase ends and the sixth phase starts.

The current source $I_{L1}$ is the current provided by the inductor $L_1$, the voltage source $V_{C2}$ is the voltage of the capacitor $C_2$ and the voltage source $V_{OUT}$ is the voltage of the capacitor $C_3$.

A positive current keeps flowing in the diode $D_{SN2}$, the diode $D_{SN1}$ becomes conductive when the voltage $V_{CSN}$ reaches null value.

The sixth phase starts before :

$$t = t_{c'} = \frac{1}{\pi * \omega_{SN}}$$

The inductor $L_{SN}$ is then demagnetised :

$$I_{LSN}(t) = I_{L1}(t_{c'}) - \frac{V_{C2}}{L_{CSN}} * (t - t_{c'}).$$

Naturally, many modifications can be made to the embodiments of the invention described above without departing from the scope of the present invention.

**Claims**

1. Converter composed of at least a first and a second switches, a first inductor, a first capacitor and at least two diodes and a snubber circuit which protects the second switch, **characterized in that** the snubber circuit is composed of a second inductor, a second capacitor and a third and a fourth diodes and **in that** the discharge of the second inductor is performed through the second capacitor during a time period which is at most half the period of the resonant circuit composed of the second capacitor and the second inductor and in the first capacitor after the time period.

2. Converter according to claim 1, **characterized in that** the converter is a DC-DC converter.

3. Converter according to claim 2, **characterized in that** the converter is a three level buck or boost converter.

4. Converter according to claim 3, **characterized in that** a first terminal of the second inductor is connected to a terminal of the first switch and to a terminal of the first capacitor, a second terminal of the second inductor is connected to the anode of the third diode and to a first terminal of the second switch, the cathode of the third diode is connected to the anode of the fourth diode and to a terminal of the second capacitor, the second terminal of the second capacitor is connected to an input terminal of the DC-DC converter and to the second terminal of the second switch, the cathode of the fourth diode is connected to the second terminal of the first capacitor.

5. Converter according to claim 3, **characterized in that** a terminal of the first switch is connected to a terminal of the first capacitor, to the anode of the third diode and to a first terminal of the second switch, the cathode of the third diode is connected to the anode of the fourth diode and to a terminal of the second capacitor, the second terminal of the second capacitor is connected to an input terminal of the DC-DC converter and to the second terminal of the second switch, a second terminal of the first capacitor is connected to a first terminal of the second inductor and the second terminal of the inductor is connected to the cathode of the fourth diode.

6. Converter according to claim 2, **characterized in that** the converter is a boost converter.

7. Converter according to claim 6, **characterized in that** a first terminal of the second switch is connected to a terminal of the first capacitor and to the anode of the third diode, the cathode of the third diode is connected to the anode of the fourth diode and to a first terminal of the second capacitor, the second terminal of the second capacitor is connected to an input terminal of the converter and to the second terminal of the second switch, the first terminal of the second inductor is connected to a first terminal of the second capacitor and the cathode of the fourth diode is connected to the second terminal of the second inductor.

8. Converter according to claim 7, **characterized in that** the snubber circuit further comprises another capacitor of which a first terminal is connected to the anode of the fourth diode and a second is connected to the anode of the second diode.

9. Converter according to claim 2, **characterized in that** the converter is a buck converter.

10. Converter according to claim 9, **characterized in that** a first terminal of the first switch is connected to a first input of the converter, the anode of the third diode is connected to the cathode of the fourth diode, to a first terminal of the third capacitor, the cathode of the third diode is connected to a first terminal of the second inductor and to a second terminal of the first switch, the anode of the third diode is connected to the anode of the fourth diode and to the cathode of the second diode and to a first terminal of the second capacitor, the second terminal of the second capacitor is connected to a second terminal of the second inductor and to a first terminal of the second switch, the second terminal of the second switch is connected to the cathode of the second diode and to a first terminal of the first inductor, the second terminal of the first inductor is connected to a first output terminal of the DC-DC converter, the second terminal of the fourth capacitor is connected to a second input and output terminals of the converter and to the anode of the second diode.

11. Converter according to claim 7, **characterized in that** the snubber circuit further comprises another capacitor of which a first terminal is connected to the anode of the third diode and a second terminal is connected to the first terminal of the first switch.

12. Converter according to claim 1, **characterized in that** the converter is a bidirectional converter which further comprises a third and a fourth switch, a third and a fourth diodes, the snubber circuit further protects the fourth switch and the snubber circuit further comprises a third capacitor.

Fig. 1a

Fig. 1b

Fig. 1c

Fig. 1d

Fig. 1e

20

200 Processor | Boost converter ~205

203 RAM | ADC ~206

202 ROM ~201

## Fig. 2

$I_{L1}$

$V_{C2}$

$L_{SN}$

$D_{SN1}$

$V_{S2}$  $C_{SN}$

## Fig. 3a

Fig. 3b

Fig. 3c

Fig.4a

Fig.4b

Fig. 5a

Fig. 5b

Fig. 5c

Fig. 5c

Fig. 6a

Fig. 6b

**EUROPEAN SEARCH REPORT**

Europäisches
Patentamt
European
Patent Office
Office européen
des brevets

Application Number

EP 13 16 0435

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 169 671 B1 (MAO HENGCHUN [US]) 2 January 2001 (2001-01-02) * figures 1-2 * * column 3, line 60 - column 4, line 65 * | 1-12 | INV. H02M1/34 H02M3/155 |
| A | US 2012/068678 A1 (HATAE SHINJI [JP] ET AL) 22 March 2012 (2012-03-22) * figure 1 * | 1-12 | |
| A | US 2007/236187 A1 (WAI RONG-JONG [TW] ET AL) 11 October 2007 (2007-10-11) * figure 2 * * paragraph [0035] - paragraph [0041] * | 1-12 | |
| A | SMITH K M ET AL: "ENGINEERING DESIGN OF LOSSLESS PASSIVE SOFT SWITCHING METHODS FOR PWM CONVERTERS I. WITH MINIMUM VOLTAGE STRESS CIRCUIT CELLS", APEC '98. 13TH ANNUAL APPLIED POWER ELECTRONICS CONFERENCE AND EXPOSITION. ANAHEIM, CA, FEBR. 15 - 19, 1998; [ANNUAL APPLIED POWER ELECTRONICS CONFERENCE], NEW YORK, NY : IEEE, US, 15 February 1998 (1998-02-15), pages 1055-1062, XP000948306, DOI: 10.1109/APEC.1998.654028 ISBN: 978-0-7803-4341-2 * figure 2 * * page 1057 * | 1-12 | TECHNICAL FIELDS SEARCHED (IPC) H02M |

-/--

The present search report has been drawn up for all claims

| Place of search | Date of completion of the search | Examiner |
|---|---|---|
| The Hague | 24 June 2013 | Riehl, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 13 16 0435

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XIANGNING HE ET AL: "BRIDGE LEG SNUBBERS FOR GTO THYRISTOR INVERTERS", RECORD OF THE INDUSTRY APPLICATIONS CONFERENCE (IAS). ORLANDO, OCT. 8 - 12, 1995; [RECORD OF THE INDUSTRY APPLICATIONS CONFERENCE (IAS)], NEW YORK, IEEE, US, vol. 2, 8 October 1995 (1995-10-08), pages 1038-1044, XP000546847, ISBN: 978-0-7803-3009-2 * figures 2-3 * * page 1040 * ----- | 1-12 | |

TECHNICAL FIELDS
SEARCHED      (IPC)

The present search report has been drawn up for all claims

| Place of search | Date of completion of the search | Examiner |
|---|---|---|
| The Hague | 24 June 2013 | Riehl, Philippe |

**ANNEX TO THE EUROPEAN SEARCH REPORT
ON EUROPEAN PATENT APPLICATION NO.**                    EP 13 16 0435

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2013

| Patent document cited in search report | Publication date | Patent family member(s) | Publication date |
|---|---|---|---|
| US 6169671 B1 | 02-01-2001 | NONE | |
| US 2012068678 A1 | 22-03-2012 | CN 102412722 A<br>DE 102011082706 A1<br>JP 2012070505 A<br>US 2012068678 A1 | 11-04-2012<br>22-03-2012<br>05-04-2012<br>22-03-2012 |
| US 2007236187 A1 | 11-10-2007 | NONE | |